**Europäisches Patentamt**

**European Patent Office**

**Office européen des brevets**

(19)

(11) Veröffentlichungsnummer: **0 195 886**
**B1**

(12) **EUROPÄISCHE PATENTSCHRIFT**

(45) Veröffentlichungstag der Patentschrift:
**17.11.88**

(51) Int. Cl.⁴: **B 62 D 1/18**

(21) Anmeldenummer: **86100536.1**

(22) Anmeldetag: **17.01.86**

(54) **Lenkradanordnung.**

(30) Priorität: **28.03.85 DE 3511285**

(43) Veröffentlichungstag der Anmeldung:
**01.10.86 Patentblatt 86/40**

(45) Bekanntmachung des Hinweises auf die Patenterteilung:
**17.11.88 Patentblatt 88/46**

(84) Benannte Vertragsstaaten:
**AT BE CH FR GB IT LI LU NL SE**

(56) Entgegenhaltungen:
**DE - A - 2 113 770**
**FR - A - 998 391**
**FR - A - 1 244 431**
**FR - A - 1 460 854**
**FR - A - 2 406 556**
**GB - A - 1 082 380**
**GB - A - 1 152 424**

(73) Patentinhaber: **MACMOTER S.p.A., Via Spazzoli,
I-47015 Modigliana (FO) (IT)**

(72) Erfinder: **Haringer, Luis, Marienstrasse 29,
I-39044 Neumarkt (BZ) (IT)**

(74) Vertreter: **Schieferdecker, Lutz, Dipl.-Ing. et al,
Patentanwälte Dr.-Ing. P.K. Holzhäuser Dipl.-Met. W.
Goldbach Dipl.-Ing. L. Schieferdecker Herrnstrasse 37,
D-6050 Offenbach am Main (DE)**

## Beschreibung

Die Erfindung betrifft eine Lenkradanordnung, insbesondere für verfahrbare Baumaschinen, mit einem Lenkrad, das über ein Lenkgetriebe in einem Lenkgetriebegehäuse mit einer asymmetrisch zum Fahrersitz angeordneten Lenksäule verbunden ist und aus einer auf den Fahrersitz ausgerichteten Fahrstellung zusammen mit dem Lenkgetriebegehäuse um eine Schwenkachse und über einen Schwenkbereich von mindestens 90° in eine gegenüber dem Fahrersitz seitlich versetzte Stellung verschwenkbar ist.

Eine derartige Lenkradanordnung ist bekannt (GB-A-1 082 380). Dort fällt die Schwenkachse mit der Achse der Lenksäule zusammen, die geneigt in einer vertikalen Mittelebene zwischen zwei nebeneinander angeordneten Sitzen verläuft. Durch eine Schwenkung des Lenkgetriebegehäuses mit dem Lenkrad wird dieses aus der dem Fahrersitz zugeordneten Fahrstellung in eine dem benachbarten Sitz zugeordnete zweite Fahrstellung verlagert. Somit kann wahlweise der linke Sitz oder der rechte Sitz als Fahrersitz dienen. Zwar wird das Lenkrad längs eines aufwärts gerichteten Bogens verschwenkt, es befindet sich jedoch in beiden Betriebsstellungen in gleicher Höhenlage.

Es ist auch bekannt, das Lenkrad um eine von der Achse der Lenksäule verschiedene Achse zu verschwenken, nämlich zusammen mit dem Fahrersitz um eine vertikale Achse (DE-A-2 113 770), damit der Fahrer auch bei einer Rückwärtsfahrt in Fahrtrichtung orientiert ist, oder um eine die Lenkachse schneidende horizontale Schwenkachse (GB-A-1 152 424), um die Neigung der Lenksäule und damit der Ebene des Lenkrades zwischen einer horizontalen und einer vertikalen Ausrichtung verstellen zu können, beispielsweise um dem Fahrer auch im Stehen ein bequemes Lenken zu ermöglichen.

Insbesondere bei Baufahrzeugen hat der Fahrer auch eine Anzahl von Bedienungshebeln zu betätigen, beispielsweise für Ausleger, Schaufeln u. dgl., die in Reichweite des Fahrersitzes angeordnet sind. Bei den bekannten Lenkradanordnungen verbleibt das Lenkrad trotz seiner Verstellbarkeit dem Fahrersitz zugeordnet und im Sichtbereich des Fahrers. Dem entsprechend stört das Lenkrad bei der Bedienung.

Dementsprechend liegt der Erfindung die Aufgabe zugrunde, die Lenkradanordnung so auszubilden, dass sich eine leichtere Bedienung und eine bessere Sicht erzielen lässt, namentlich bei stillstehendem bzw. geparktem Fahrzeug.

Diese Aufgabe wird erfindungsgemäss dadurch gelöst, dass die Schwenkachse windschief zur Achse der Lenksäule verläuft und derart angeordnet ist, dass das Lenkrad beim Schwenken in die seitlich versetzte Stellung gleichzeitig bis in eine Parkstellung angehoben wird.

Diese Ausbildung schafft die Möglichkeit, das Lenkrad aus dem für die Durchführung von Bauarbeiten, wie beispielsweise Baggerarbeiten, wichtigen Sichtbereich nach vorne und unten herauszubewegen. Das erleichtert den Maschinenbetrieb.

Ausserdem kann bei den üblicherweise engen Fahrerkabinen der Fahrer auch leichter ein- und aussteigen.

Zweckmässigerweise sind Einrichtungen zum Feststellen des Lenkgetriebegehäuses mit dem Lenkrad in der Fahrstellung und in der Parkstellung vorgesehen. In diesem Falle sind die Fahrstellung und die Arbeitsstellung eindeutig vorgegeben und unabsichtliche Stellungsveränderungen von vornherein ausgeschlossen.

Bei einer vorteilhaften Ausführungsform ist zwischen Lenksäule und dem Lenkgetriebegehäuse ein Federzylinder angeordnet, wobei der Federzylinder ein druckregelbarer Hydraulikzylinder sein kann. Der Federzylinder bildet eine Stützstrebe für das Lenkgetriebe, deren Länge sich mit der Schwenkstellung des Lenkrades ändert. Dementsprechend kann durch hydraulisches Ein- und Ausfahren des Federzylinders die Verschwenkung zwischen der Fahrstellung und der Parkstellung durchgeführt werden.

Ferner ist es vorteilhaft, wenn das Lenkgetriebe als hydraulischer Drehgeber ausgebildet ist. In diesem Falle entfällt eine mechanische Übertragung der Lenkradbewegung auf die Lenksäule, die sich wegen der relativen Verlagerung des Lenkrades bei seinem Verschwenken gegenüber der Lenksäule schwieriger gestalten würde. Allerdings sind hydraulische Lenksysteme bekannt (GB-A-1 152 424).

Bei einer zweckmässigen Ausführungsform ist die geneigt angeordnete Lenkwelle zur Änderung der Höhenlage des Lenkrades in ihrer Länge verstellbar. Diese Massnahme ermöglicht eine zusätzliche Anpassung und damit Bequemlichkeit. Auch sie ist bereits bekannt (FR-A-2 406 556).

Die Erfindung ist im folgenden anhand der Zeichnungen beispielsweise näher erläutert, und zwar zeigt:

Fig. 1: eine schematische Ansicht der Lenkradanordnung,

Fig. 2: eine Draufsicht ins Innere einer Fahrerkabine,

Fig. 3: eine Frontansicht der Fahrerkabine nach Fig. 2 und

Fig. 4: eine Einzelheit der Fig. 1.

Die Zeichnungen zeigen ein Lenkrad 1, welches mittels einer Lenkwelle 2 mit einem Lenkgetriebe verbunden ist, welches in einem Gehäuse 3 angeordnet ist. Die Achse 4 der Lenkwelle 2 ist gegenüber der Fahrtrichtung geneigt angeordnet und kann in ihrer Schwenklage in bekannter Weise veränderbar sein. Ausserdem kann die Lenkwelle in ihrer Länge verstellbar sein.

Das Lenkgehäuse 3 ist seinerseits an einer Lenksäule 5 gehalten, die starr mit dem Fahrzeug verbunden ist und seitlich gegenüber der Lenkachse 4 versetzt ist.

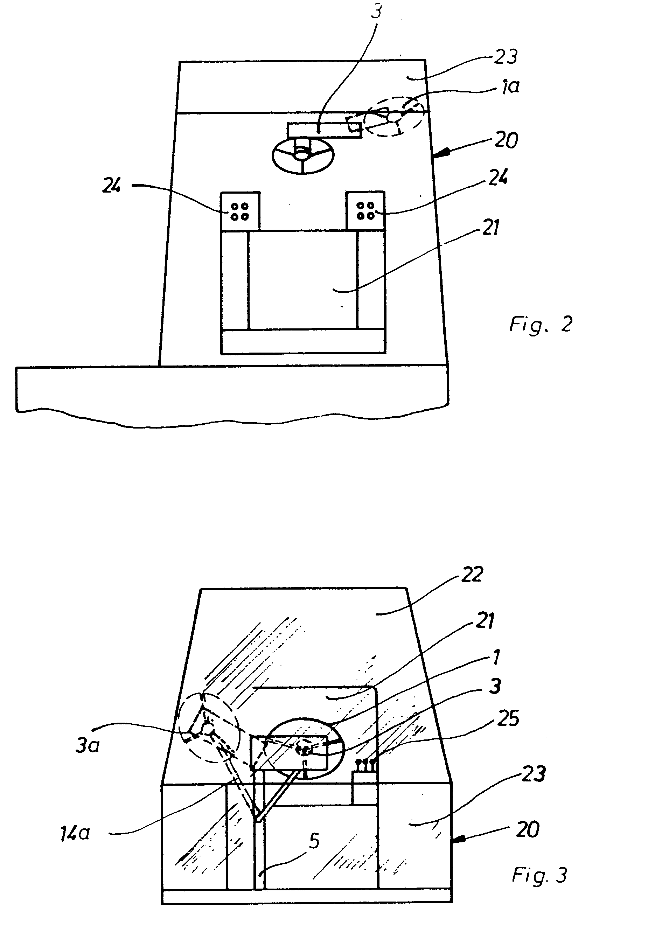

In dem dargestellten Beispiel ist angenommen, dass die Einstiegseite des Fahrers die linke Seite des Fahrzeuges ist, demgemäss ist die Lenksäule 5 gegenüber der Mitte des Fahrersitzes nach rechts versetzt angeordnet. Diese Darstellung ist auch in den Fig. 2 und 3 rein beispielsweise gewählt.

Die Lenksäule 5 weist an ihrem oberen Ende einen Flansch 6 auf, der fest oder schwenkbar mit ihr verbunden sein kann und dessen Ebene mit der Achse 7 der Lenksäule 5 einen Winkel bildet. Der Flansch 6 besitzt ausserdem eine mittlere Öffnung 8, die für den Durchtritt einer Lenkwelle geeignet ist, die den Ausgang des Lenkgetriebes bildet.

Für den Fall, dass das Lenkgetriebe als hydraulischer Drehgeber ausgebildet ist, werden die Hydraulik-Leitungen durch die Öffnung 8 in die Lenksäule 5 und von dort zur Fahrzeuglenkung geführt.

Der Flansch 6 besitzt ausserdem zwei hochragende Ansätze 9, die miteinander fluchtende Bohrungen besitzen, mit deren Hilfe das Lenkgehäuse 3 an dem Flansch 6 um eine Achse 10 schwenkbar gelagert ist.

In dem dargestellten Ausführungsbeispiel weist der Flansch ausserdem Zapfen 11 auf, welche der Festlegung des Lenkgehäuses 3 in seiner Arbeitsstellung dienen. Ein mit dem Lenkrad verbundener Knopf 12 ist mit einem nicht dargestellten Hebelgestänge verbunden, welches in einer der Speichen des Lenkrades verläuft und von dort durch die Lenkwelle 2 und das Lenkgehäuse 3 hindurch Rastelemente betätigt, die an den Zapfen 11 angreifen bzw. eine Verschwenkung freigeben.

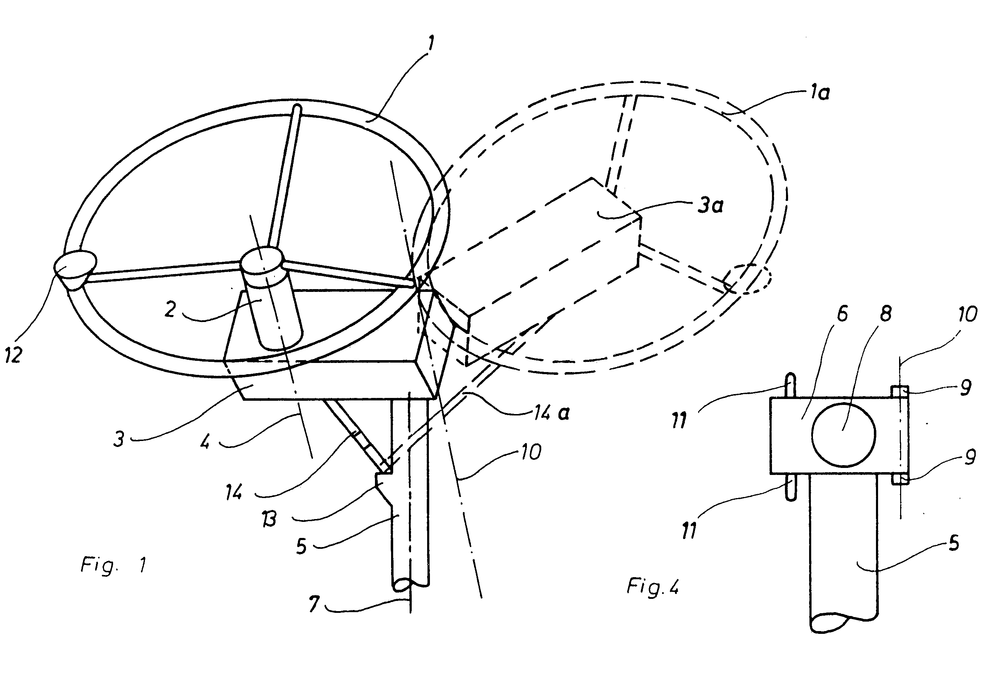

In Fig. 1 ist in unterbrochenen Linien die Lage 1a des Lenkrades und des Lenkgehäuses (3a) in der umgeklappten Lage dargestellt. Die Schwenkachse 10 des Gehäuses verläuft windschief zur Längsachse 7 der Lenksäule 5.

Die Lenksäule weist einen Ansatz 13 auf, an welchem ein Teleskopzylinder 14 gelagert ist, dessen anderes Ende an einem Punkt des Lenkgehäuses 3 angreift. Nach dem Verschwenken des Lenkrades in seine umgeklappte Lage nimmt dieser die in Fig. 1 mit 14a bezeichnete Lage ein.

In dem Teleskopzylinder kann eine Druckfeder angeordnet sein. Der Zylinder kann jedoch auch als Hydraulik-Zylinder ausgebildet sein und bewirkt in beiden Fällen, dass das Lenkgehäuse in der umgeklappten Stellung festgehalten wird.

Bei den meisten praktischen Fällen des Einbaus der Erfindung wird es genügen, das Lenkrad um 90° oder 120° nach der Seite umzuklappen. In den Zeichnungen ist angenommen, dass das Lenkgehäuse um 180° gegenüber seiner Arbeitsstellung umgeklappt werden kann.

Die Ansicht nach den Fig. 2 und 3 zeigt den beispielsweisen Aufbau einer Fahrerkabine 20, die ein Fahrersitz 21 enthält und nach vorne hin eine obere Frontscheibe 22 und eine untere Frontscheibe 23 aufweist. Nahe den vorderen Enden der Armlehnen des Fahrersitzes sind beiderseits Konsolen 24 angeordnet, die die Betätigungshebel 25 für mit dem Fahrzeug verbundene Hydraulik-Zylinder enthalten.

Die Ansicht nach Fig. 3 zeigt besonders deutlich, wie durch ein erfindungsgemäss seitliches Wegklappen des Lenkgehäuses und des Lenkrades die Sicht eines Fahrers nach vorne und insbesondere durch die untere Scheibe (bei einem Bagger) verbessert wird.

In der Darstellung nach Fig. 3 ist zu erkennen, dass ein Verschwenken des Lenkgehäuses 3 um eine schräge bzw. windschiefe Achse der Lenksäule 5 die relative Lage des Lenkrades und des Lenkgehäuses nach dem Umklappen anhebt und so auch die seitliche Sicht durch die Frontscheibe 23 und evtl. Seitenscheiben verbessert.

**Patentansprüche**

1. Lenkradanordnung, insbesondere für verfahrbare Baumaschinen, mit einem Lenkrad (1), das über ein Lenkgetriebe in einem Lenkgetriebegehäuse (3) mit einer asymmetrisch zum Fahrersitz (21) angeordneten Lenksäule (5) verbunden ist und aus einer auf den Fahrersitz (21) ausgerichteten Fahrstellung zusammen mit dem Lenkgetriebegehäuse (3) um eine Schwenkachse (10) und über einen Schwenkbereich von mindestens 90° in eine gegenüber dem Fahrersitz (21) seitlich versetzte Stellung verschwenkbar ist, dadurch gekennzeichnet, dass die Schwenkachse (10) windschief zur Achse (7) der Lenksäule (5) verläuft und derart angeordnet ist, dass das Lenkrad (1) beim Schwenken in die seitlich versetzte Stellung gleichzeitig bis in eine Parkstellung angehoben wird.

2. Lenkradanordnung nach Anspruch 1, dadurch gekennzeichnet, dass Einrichtungen (11, 12) zum Feststellen des Lenkgetriebegehäuses (3) mit dem Lenkrad (1) in der Fahrstellung und in der Parkstellung vorgesehen sind.

3. Lenkradanordnung nach Anspruch 1 oder 2, dadurch gekennzeichnet, dass zwischen der Lenksäule (5) und dem Lenkgetriebegehäuse (3) ein Federzylinder (14) angeordnet ist.

4. Lenkradanordnung nach Anspruch 3, dadurch gekennzeichnet, dass der Federzylinder (14) ein druckregelbarer Hydraulik-Zylinder ist.

5. Lenkradanordnung nach einem der Ansprüche 1 bis 4, dadurch gekennzeichnet, dass das Lenkgetriebe als hydraulischer Drehgeber ausgebildet ist.

6. Lenkradanordnung nach einem der Ansprüche 1 bis 5, dadurch gekennzeichnet, dass die geneigt angeordnete Lenkwelle (2) zur Änderung der Höhenlage des Lenkrades (1) in ihrer Länge verstellbar ist.

**Claims**

1. A steering wheel arrangement for traveling constructional machines, comprising a steering wheel (1), which is connected via a steering transmission in a steering transmission housing (3) with a steering column (5) arranged asymmetrically in relation to the driver's seat (21) and is able to be pivoted out of a driving setting in line with the driver's seat (21) together with the steering transmission housing (3) about a pivot axis (10) and through a pivoting range of at least 90° into a position offset laterally in relation to the driver's seat, characterized in that the pivot axis (10) extends obliquely in relation to the axis (7) of the steering column (5) and is so arranged that on pivoting the steering wheel (1) into the laterally offset setting it is simultaneously lifted into a parking setting.

2. The steering wheel arrangement as claimed in claim 1 characterized by means (11 and 12) for locking the steering transmission housing (3) with the steering wheel (1) in the driving setting and in the parking setting.

3. The steering wheel arrangement as claimed in claim 1 or claim 2 characterized in that a spring cylinder (14) is arranged between the steering column (5) and the steering transmission housing (3).

4. The steering wheel arrangement as claimed in claim 3 characterized in that the spring cylinder (14) is an adjustable pressure hydraulic cylinder.

5. The steering wheel arrangement as claimed in any one of the claims 1 through 4 characterized in that the steering transmission is in the form of a hydraulic system for transmitting rotary motion.

6. The steering wheel arrangement as claimed in any one of the claims 1 through 5, characterized in that the steering shaft (2), arranged at an angle, may be adjusted in length to vary the level of the steering wheel (1).

## Revendications

1. Ensemble volant de direction, en particulier pour engins automobiles de chantiers, comportant un volant (1) qui, par l'intermediaire d'un mécanisme de direction monté dans un carter (3), est réuni à une colonne de direction (5) asymétrique relativement au siège du conducteur (21) et est orientable en même temps que le carter de direction (3) à partir d'une position de route dans l'alignement du siège du conducteur (21), autour d'un axe de pivotement (10) et sous un angle d'au moins 90°, en une position décalée latéralement par rapport au siège du conducteur (21), caractérisé par le fait que l'axe de pivotement (10) est gauche relativement à l'axe (7) de la colonne de direction (5) et est disposé de telle sorte que le volant (1) est soulevé en position de parking lors de son pivotement en position déportée latéralement.

2. Ensemble volant de direction selon revendication 1, caractérisé par le fait que des dispositifs (11, 12) sont prévus pour l'immobilisation du carter de direction (3), volant de direction (1) compris, en position de route et de parking.

3. Ensemble volant de direction selon revendications 1 ou 2 caractérisé par le fait qu'entre la colonne de direction (5) et le carter à mécanisme de direction (3) se trouve un jambage à ressort (14).

4. Ensemble volant de direction selon revendication 3 caractérisé par le fait que le jambage à ressort (14) est un vérin hydraulique à pression variable.

5. Ensemble volant à main selon l'une des revendications 1 à 4, caractérisé par le fait que le mécanisme de direction est conçu en tant que résolveur hydraulique.

6. Ensemble volant à main selon une des revendications 1 à 5, caractérisé par le fait que l'arbre de direction (2) incliné est réglable en longueur, permettant ainsi de varier la hauteur du volant à main (1).

Fig. 1

Fig. 4

0195886

Fig. 2

Fig. 3